# EUROPÄISCHE PATENTSCHRIFT

(11) **EP 3 606 767 B1**
(45) Veröffentlichungstag und Bekanntmachung des Hinweises auf die Patenterteilung: **09.09.2020**
(21) Anmeldenummer: 18717283.8
(22) Anmeldetag: 03.04.2018
(51) Int. Cl.: B60B 35/02, B60B 35/08

(54) **ACHSSYSTEM**
AXLE SYSTEM
SYSTÈME D'ESSIEU

(30) Priorität: 04.04.2017 DE 102017107207
(43) Veröffentlichungstag der Anmeldung: 12.02.2020
(73) Patentinhaber: SAF-HOLLAND GmbH, 63856 Bessenbach (DE)
(72) Erfinder: CHRIST, Armin, Verstorben (DE); STEGMANN, Rainer, 63768 Hösbach (DE)
(74) Vertreter: Müller Schupfner & Partner Patent- und Rechtsanwaltspartnerschaft mbB
(86) Internationale Anmeldenummer: PCT/EP2018/058405
(87) Internationale Veröffentlichungsnummer: WO 2018/185057

(56) Entgegenhaltungen:
- DE-A1-102005 038 275
- DE-U1- 20 119 640
- US-A1- 2006 001 312

## Beschreibung

Die vorliegende Erfindung betrifft ein Achssystem für Nutzfahrzeuge.

Aus dem Stand der Technik bekannte Achssysteme verwenden häufig ein starres Achsrohr an welchem ein Achsstummel festgeschweißt wird, wobei am Achsstummel zumindest ein Fahrzeugrad des Nutzfahrzeuges drehbar festgelegt ist. Weiterhin werden an den aus dem Stand der Technik bekannten Achssystemen auch Bremsträger, insbesondere zur Festlegung einer Scheibenbremse oder einer Trommelbremse festgeschweißt. Bei den aus dem Stand der Technik bekannten Achssystemen ist es dabei nachteilig, dass durch das Einbringen von Schweißnähten an mehrere Stellen des hochbelasteten Verbundes aus Achsstummel und Achsrohr lokale Materialspannungen auftreten, welche die elastische Verformbarkeit des Materials verringern und insbesondere die Gefahr eines Sprödbruches erhöhen. Weiterhin können die aus dem Stand der Technik bekannten Achssysteme nicht demontiert werden, um beispielsweise einzelne der Komponenten zu ersetzen oder an neue Einsatzbedingungen anzupassen.

Die DE 201 19 640 U1 zeigt ein Achssystem umfassend einen Achsstummel und eine Klemmeinheit, wobei der Achsstummel im Wesentlichen rotationssymmetrisch um eine Stummelachse ausgebildet ist und wobei in einem montierten Zustand die Klemmeinheit eine Klemmkraft auf den Achsstummel überträgt, wobei im montierten Zustand die Klemmeinheit und der Achsstummel kraftschlüssig gegen Relativbewegungen zueinander gesichert sind.

Die US 2006/0001312 A1 offenbart ein Achssystem, bei welchem ein Achsstummelelement mittels eines formschlüssig eingreifenden und durch eine Mutter gesicherten Bolzens an einem Achsrohr festlegbar ist.

Dokument DE 10 2005 038 275 A1 offenbart einen zweiteiligen Bremsträger, welcher zur kraftschlüssigen Festlegung an einem Achsenelement ausgelegt ist.
Aufgabe der vorliegenden Erfindung ist die Bereitstellung eines Achssystems, bei welchem die einzelnen Komponenten des Achssystems ohne nachteilige Einbringung von Schweißnähten miteinander verbunden werden können und wieder voneinander getrennt werden können.

Diese Aufgabe wird gelöst mit einem Achssystem gemäß Anspruch 1.

Erfindungsgemäß umfasst das Achssystem einen Achsstummel und eine Klemmeinheit, wobei der Achsstummel im Wesentlichen rotationssymmetrisch um eine Stummelachse ausgebildet ist, wobei in einem montierten Zustand die Klemmeinheit eine Klemmkraft auf den Achsstummel überträgt und wobei im montierten Zustand die Klemmeinheit und der Achsstummel kraftschlüssig gegen Relativbewegung zueinander gesichert sind. In einer ersten erfindungsgemäßen Ausführungsform weist das Achssystem zumindest einen Achsstummel und eine Klemmeinheit auf. Bevorzugt ist die Klemmeinheit in dieser Ausführungsform ein Bremsträger, welcher für die Festlegung einer Scheibenbremse oder einer Trommelbremse ausgelegt ist. Dabei sind das Achsrohr und die Klemmeinheit über eine zumindest kraftschlüssige Verbindung miteinander derart verbunden, dass die Übertragung von hohen Biege- und Drehmomenten vom Bremsträger auf den Achsstummel möglich ist. Im Rahmen der vorliegenden Erfindung ist es dabei vorgesehen, dass die Kraftübertragung von der Klemmeinheit auf den Achsstummel unmittelbar, das heißt ohne dazwischenliegende und übermittelnde Elemente, oder mittelbar, das heißt über zwischen der Klemmeinheit und dem Achsstummel angeordnete Zwischenelemente oder Zwischenbereiche, erfolgen kann. Der Achsstummel ist im Wesentlichen rotationssymmetrisch ausgebildet, was bedeutet, dass insbesondere die Außengeometrie im Eingriffsbereich mit der Klemmeinheit vorzugsweise rotationssymmetrisch um eine Stummelachse geformt ist. Dabei kann der Achsstummel aber beispielsweise Hydraulikkanäle zur Versorgung einer am Achsstummel festlegbaren Antriebseinheit aufweisen, welche in ihrer Anordnung nicht rotationssymmetrisch um eine Stummelachse im Achsstummel vorgesehen sind. Die Ausbildung des Achsstummels als rotationssymmetrisches Bauteil hat den Vorteil, dass dieser Achsstummel besonders leicht herzustellen ist. Der Vorteil einer Klemmverbindung zwischen der Klemmeinheit, bevorzugt einem Bremsträger, und dem Achsstummel liegt darin, dass der Achsstummel nicht durch die Einbringung einer oder mehrerer Schweißnähte im hochsensiblen Bereich der Kraftübertragung zwischen der Klemmeinheit und dem Achsstummel geschwächt wird. Darüber hinaus ist es möglich, insbesondere um beispielsweise die Bremsanlage eines Nutzfahrzeuges zu aktualisieren, die Klemmeinheit vom Achsstummel zu entnehmen und durch eine andere Klemmeinheit zu ersetzen.

Mit Vorteil weisen die Klemmeinheit und der Achsstummel jeweils Eingriffsmittel auf, wobei die Eingriffsmittel dafür ausgelegt sind, im montierten Zustand die Klemmeinheit und den Achsstummel formschlüssig gegen Rotation relativ zueinander um die Stummelachse zu sichern. Als Eingriffsmittel eignet sich dabei insbesondere eine Riffelung, welche an der Innenseite bzw. an den zum Achsstummel hingewandten Flächen der Klemmeinheit vorgesehen ist und welche sich teilweise in das Material des Achsstummels eingräbt und somit einen Formschluss zwischen Klemmeinheit und Achsstummel herstellt oder welche mit einer am Achsstummel vorgesehenen korrespondierenden Riffelung in Eingriff bringbar ist, um ein Verdrehen der Klemmeinheit um die Stummelachse relativ zum Achsstummel zu verhindern. Besonders bevorzugt bilden die Eingriffsmittel somit eine entlang einer Tangentialrichtung eines um die Stummelachse gezogenen Kreises wirkende Hinterschneidung zwischen der Klemmeinheit und dem Achsstummel, welche eine Verdrehung entlang dieser Tangentialrichtung verhindert. Es kann auf diese Weise durch die Kombination der kraftschlüssigen Verbindung der Klemmeinheit mit dem Achsstummel mit einem Formschluss eine zusätzliche Steigerung der Verbindungsfestigkeit zwischen den beiden Bauteilen erreicht werden. Gleichzeitig sind solche Eingriffsmittel besonders einfach herstellbar, insbesondere durch Oberflächenbearbeitung mit einem Rändelwerkzeug, welches als einfache Drehoperation sowohl an der Klemmeinheit als auch am Achsstummel durchgeführt werden kann. Insbesondere im Vergleich zur Herstellung einer Schweißverbindung kann somit die Herstellung des Achssystems deutlich vereinfacht und kostengünstiger gestaltet werden.

Bevorzugt ist ein Achsrohr vorgesehen, welches im Wesentlichen rotationssymmetrisch um eine Rohrachse ausgebildet ist, wobei das Achsrohr und der Achsstummel derart ausgelegt sind, dass im montierten Zustand das Achsrohr mittels der Klemmeinheit gegen den Achsstummel klemmbar ist, derart dass die Stummelachse und die Rohrachse kollinear zueinander verlaufen. Der montierte Zustand ist der Zustand des Achssystems, in welchem die beteiligten Komponenten Achsstummel, Klemmeinheit und vorzugsweise Achsrohr kraft- und/oder formschlüssig aneinander festgelegt sind. Im Gegensatz hierzu ist der demontierte Zustand des Achssystems der Zustand, in dem die einzelnen Komponenten ohne kraft- und/oder formschlüssigen Eingriff miteinander vorliegen. Das Achsrohr ist vorzugsweise die starre Achse eines Nutzfahrzeuges, welche besonders bevorzugt rotationssymmetrisch um die Rohrachse ausgebildet ist. In einer alternativen Ausführungsform kann die Rohrachse auch spiegelsymmetrisch zu einer oder mehreren Ebenen, welche sich in der Rohrachse schneiden, ausgebildet sein. Beispielsweise kann das Achsrohr einen im Wesentlichen rechteckigen oder rechteckig mit gerundeten Ecken versehenen Querschnitt aufweisen. Besonders bevorzugt ist es, dass das Achsrohr einen Querschnitt aufweist, welcher sich entlang der Rohrachse im Wesentlichen nicht ändert. Die von der Klemmeinheit aufgebrachte Klemmkraft wird vorzugsweise mittelbar über das Achsrohr an den Achsstummel übertragen, wobei gleichzeitig auch das Achsrohr und der Achsstummel aneinander festgelegt werden. Auf diese Weise kann ein kraftschlüssig miteinander verbundener Verbund aus Achsrohr, Achsstummel und Klemmeinheit hergestellt werden, welcher bisher nur mittels einer Schweißverbindung herstellbar war.

Besonders bevorzugt sind das Achsrohr und der Achsstummel formschlüssig in Eingriff bringbar, wobei die Klemmeinheit einen Gewindestift aufweist, welcher in einer Aussparung am Achsrohr eingreift und gegen eine Stützfläche am Achsstummel klemmbar ist, wobei im montierten Zustand des Achssystems der Gewindeschaft das Achsrohr und den Achsstummel in formschlüssigem Eingriff miteinander sichert. In einer bevorzugten Ausführungsform des Achssystems sind das Achsrohr und der Achsstummel formschlüssig miteinander in Eingriff bringbar. Gemeinsam mit dem Formschluss ist mit Vorteil auch ein Kraftschluss hergestellt. Insbesondere bevorzugt ist zwischen dem Achsrohr und dem Achsstummel zumindest bereichsweise ein Überlappungsbereich vorgesehen, welcher beispielsweise mit einem Gewinde ausgestattet ist, wobei der Achsstummel vorzugsweise in das Achsrohr einschraubbar ist. Zusätzlich ist am Achsstummel vorzugsweise eine Stützfläche vorgesehen, an welcher ein in einer Aussparung am Achsrohr eingeschraubter Gewindestift sich abstützend zur Anlage gelangen kann, um das Achsrohr und den Achsstummel in der Position relativ zueinander zu sichern, in welcher der formschlüssige Eingriff zwischen Achsrohr und Achsstummel vorliegt. Mit anderen Worten dient der Gewindestift dem Kontern des Achsrohres am Achsstummel in dem Zustand, in dem der Achsstummel vollständig in das Achsrohr eingeschraubt ist. Bei dieser bevorzugten Ausführungsform bildet somit der Gewindestift eine Klemmeinheit, welche durch eine form- und kraftschlüssige Abstützung am Achsstummel ein Verlagern des Achsstummels relativ zum Achsrohr verhindert und gleichzeitig eine Klemmkraft vom Achsrohr auf den Achsstummel überträgt. Es versteht sich, dass die Klemmeinheit zusätzlich weitere Klemmelemente aufweisen kann, die von außen auf das Achsrohr und/oder den Achsstummel einwirken, um weitere Systeme am Achssystem festlegen zu können.

Mit Vorteil ist der Achsstummel derart in das Achsrohr steckbar, dass eine orthogonal zur Stummelachse verlaufende Halteebene den Achsstummel, das Achsrohr und die Klemmeinheit schneidet. Mit anderen Worten ist vorzugsweise zwischen dem Achsstummel und dem Achsrohr in dem Bereich eine Überschneidung vorhanden, in welchem die Klemmeinheit auf das Achsrohr, oder vorzugsweise auf das Achsrohr und den Achsstummel, einwirkt. Mit Vorteil kann der Achsstummel dabei ein Übermaß gegenüber der Aussparung des Achsrohres aufweisen, so dass dieser bereits durch bloßes Einstecken in das Achsrohr kraftschlüssig an diesem gehalten ist. Zusätzlich zu dieser Verbindung zwischen Achsstummel und Achsrohr wird die Klemmeinheit vorzugsweise dazu verwendet, eine Kraft von außen, vorzugsweise eine Flächenkraft, auf das Achsrohr zu übertragen, welche die Verbindung zwischen Achsstummel und Achsrohr zusätzlich verstärkt. Auf diese Weise kann ein besonders sicherer Verbund zwischen Achsstummel und Achsrohr erzeugt werden, wobei die Klemmeinheit den zusätzlichen Vorteil bietet, dass weitere Systeme, wie beispielsweise eine Bremsanlage, an dem Verbund aus Achsstummel und Achsrohr kraftschlüssig festlegbar sind.

Besonders bevorzugt weist das Achsrohr in einem Überlappungsbereich mit dem Achsstummel zumindest einen Schlitz auf, wobei die Haupterstreckungsrichtung des Schlitzes im Wesentlichen parallel zur Rohrachse verläuft. Der Schlitz ist vorzugsweise im Bereich des Achsrohres eingebracht, in welchem das Achsrohr die von der Klemmeinheit aufgebrachte Kraft an den Achsstummel überträgt. Beim Klemmen das Achsrohres gegen den Achsstummel wird der Querschnitt des Achsrohres um die Rohrachse bzw. in einer senkrecht zur Rohrachse stehenden Ebene vorzugsweise verkleinert, um das Untermaß der Aussparung des Achsrohres gegenüber den Außendimensionen des Achsstummels herzustellen. Um dieser Querschnittsverkleinerung den entsprechenden Raum zu geben, ohne dabei Verwerfungen im Material des Achsrohres zu erzeugen, kann das Achsrohr derart verformt werden, dass sich der Schlitz beim Klemmen des Achsrohres verkleinert oder vollständig schließt. Bevorzugt kann eine Vielzahl von vorzugsweise gleichmäßig über den Umfang des Achsrohres verteilten Schlitzen vorgesehen sein, um eine besonders gleichmäßige Verformung bei Anpressung des Achsrohres an den Achsstummel zu erreichen. Es können auf diese Weise die im Achsrohr entstehenden Materialspannungen deutlich gesenkt werden, wobei trotzdem eine hohe Klemmkraft zwischen der Klemmeinheit und dem Achsrohr übertragbar ist. In einer besonders bevorzugten Ausführungsform kann der Achsstummel im Bereich des einen Schlitzes oder einer Vielzahl von Schlitzen bei einer Überlappung des Achsrohres mit dem Achsrohr jeweils einen korrespondierend zum Schlitz geformten Vorsprung aufweisen, welcher gleichzeitig eine Verdrehsicherung des Achsrohres und des Achsstummels gewährleistet.

In einer weiteren bevorzugten Ausführungsform sind der Achsstummel und das Achsrohr derart gegeneinander klemmbar, dass die Kontaktfläche zwischen beiden Bauteilen im Wesentlichen in einer orthogonal zur Stummelachse verlaufenden Halteebene liegt, wobei die Klemmeinheit ebenensymmetrisch zur Halteebene ausgebildet ist und/oder von der Halteebene geschnitten ist. Alternativ oder zusätzlich zu der Überlappung des Achsstummels und des Achsrohres derart, dass beide Bauteile von einer Halteebene geschnitten sind, können der Achsstummel und das Achsrohr auch zwei entsprechende Vorsprünge aufweisen, an welchen die Klemmeinheit eingreift, um den Achsstummel und das Achsrohr derart gegeneinander zu pressen, dass die Kontaktfläche zwischen beiden Bauteilen im Wesentlichen in einer orthogonal zur Stummel- und/oder zur Rohrachse verlaufenden Halteebene liegt. Der Vorteil dieser Ausführungsform ist, dass der Hebelarm, der zwischen dem Achsrohr und dem Achsstummel wirkenden Haltekraft, welche von der Klemmeinheit aufgebracht wird, besonders groß ist und somit höhere Biegemomente bei vergleichsweise geringer Haltekraft aufgebracht werden können. Mit anderen Worten ist der Bereich, in welchem die Klemmeinheit eine Klemmkraft auf den Achsstummel und das Achsrohr überträgt, möglichst weit von der Stummelachse bzw. der Rohrachse beabstandet. Weiterhin bevorzugt ist für diese Ausführungsform keine große Überlappung zwischen dem Achsstummel und dem Achsrohr erforderlich, wodurch insbesondere am Achsstummel an Material gespart werden kann. Hierdurch kann das Gewicht des Achssystems gesenkt werden.

Bevorzugt weist der Achsstummel einen Sicherungsabschnitt auf, der dafür ausgelegt ist, im montierten Zustand form- und/oder kraftschlüssig am Achsrohr einzugreifen. Dabei bildet der Sicherungsabschnitt vorzugsweise eine Überlappung mit dem Achsrohr, wie diese bereits zuvor beschrieben wurde. Weiterhin ist der Sicherungsabschnitt vorzugsweise kegelförmig oder pyramidenstumpfförmig ausgebildet, um in eine entsprechend korrespondierende Aussparung des Achsrohres nicht nur formschlüssig einzugreifen, sondern vorzugsweise auch hineingeklemmt werden zu können. Auf diese Weise ist es möglich, durch Aufbringen einer Klemmkraft, welche den Achsstummel längs oder parallel zur Stummelachse und zur Rohrachse in das Achsrohr einpresst, eine Klemmkraft zwischen dem Achsstummel und dem Achsrohr zu etablieren, welche eine zusätzliche Verlagerungssicherung zwischen beiden Bauteilen gewährleistet. Insbesondere in Kombination mit einer Klemmeinheit, welche eine Klemmkraft aufbringt, welche parallel zur Rohr- und Stummelachse wirkt, kann auf diese Weise eine besonders feste Verbindung zwischen dem Achsrohr und dem Achsstummel hergestellt werden.

Vorzugsweise ist der Sicherungsabschnitt abschnittsweise kegelförmig oder pyramidenförmig ausgebildet. Dabei verläuft die Höhe des Kegels oder der Pyramide vorzugsweise kollinear zur Stummelachse. Durch einen Kegel ist es möglich, den Achsstummel mit einer im Wesentlichen rotationssymmetrischen Innengeometrie des Achsrohres zu verklemmen. Eine pyramidenförmige Geometrie bietet sich an, um insbesondere mit einem rechteckförmigen Querschnitt der Aussparung des Achsrohres in Eingriff zu gelangen und dabei gleichzeitig eine besonders gute Verdrehsicherung um die Stummelachse und/oder die Rohrachse zwischen dem Achsstummel und dem Achsrohr bereitzustellen.

Erfindungsgemäß weist die Klemmeinheit ein erstes Klemmteil und ein zweites Klemmteil auf, wobei das erste Klemmteil und das zweite Klemmteil je eine Klemmfläche aufweisen, wobei im montierten Zustand das erste und das zweite Klemmteil durch ein Kraftmittel gegeneinander gezwungen werden und die Klemmflächen an korrespondierenden Halteflächen am Achsrohr und/oder am Achsstummel anliegen. Besonders bevorzugt ist die Klemmeinheit somit aus zwei Teilen aufgebaut, welche vorzugsweise durch ein Kraftmittel gegeneinander gezwungen werden und dabei gleichzeitig eine Klemmkraft auf das Achsrohr und/oder den Achsstummel übertragen. In einer ersten Ausführungsform, in welcher die Klemmeinheit unmittelbar am Achsstummel angreift, liegen die jeweiligen Klemmflächen der Klemmteile somit am Achsstummel an, wobei zwischen den Klemmflächen und der korrespondierenden Haltefläche am Achsstummel eine zumindest kraftschlüssige Verlagerungssicherung durch Kraft- bzw. Reibschluss erzeugt wird. Vorzugsweise können die Klemmteile auch jeweils sowohl am Achsrohr als auch am Achsstummel anliegen und angreifen, wobei die Klemmteile vorzugsweise mehrere Klemmflächen aufweisen, die mit jeweils einer gegenüberliegend vorgesehenen Haltefläche am Achsrohr bzw. am Achsstummel in Eingriff gelangen. Als Kraftmittel hat sich besonders bevorzugt ein Bolzen mit Außengewinde bewährt, welcher mit einem Innengewinde in Eingriff bringbar ist, wobei das Innengewinde vorzugsweise an einer zusätzlich bereitzustellenden Mutter oder an einem der Klemmteile ausgebildet ist. Alternativ bevorzugt kann eines der Klemmteile einen Vorsprung aufweisen, welcher mit einem Außengewinde ausgestattet ist und über ein entsprechendes Mutterelement form- und kraftschlüssig an dem jeweiligen gegenüberliegenden Klemmteil festgeklemmt werden kann.

Vorzugsweise sind die Klemmflächen mit dem Achsrohr in Eingriff bringbar, wobei das Achsrohr im Bereich der Halteflächen derart verformbar ist, dass es am Achsstummel festklemmbar ist. Besonders bevorzugt ist also im montierten Zustand des Achssystems die Klemmfläche derart gegen das Achsrohr geklemmt, dass dieses im Bereich der Haltefläche oder Halteflächen derart verformt ist, dass es gleichzeitig eine Klemmkraft auf den bereichsweise innerhalb des Achsrohres angeordneten Achsstummel überträgt.

Besonders bevorzugt weist eines der Klemmteile einen Bremsträger auf. In einer besonders bevorzugten Ausführungsform ist eines der Klemmteile derart ausgeführt, dass einstückig am Klemmteil ein Bremsträger ausgebildet ist. Es kann somit eine Integration der zwei Funktionen Bremsträger und Klemmeinheit erreicht werden, wodurch das Gesamtgewicht des Achssystemes deutlich reduziert wird und auch die Herstellung eines Achssystems durch die Veringerung der erforderlichen Bauteile kostengünstiger ausfällt. Vorzugsweise ist der Bremsträger als Bremsträger einer Scheibenbremse ausgebildet und weist eine flache sich im Wesentlichen quer zur Stummelachse erstreckende Haupterstreckungsrichtung auf. Alternativ hierzu kann der Bremsträger auch ein Bremsträger für eine Trommelbremse sein, wobei in dieser bevorzugten Ausführungsform vorzugsweise beide Klemmteile jeweils eine Haltegeometrie des Bremsträgers aufweisen. So kann an dem ersten Klemmteil der Bereich des Bremsträgers ausgebildet sein, an welchem beispielsweise eine Klemmeinheit oder die Führung eines S-Nockens festgelegt ist. Das zweite Klemmteil kann vorzugsweise den Bereich des Bremsträgers aufweisen, an welchem zwei Bremsbacken schwenkbar zueinander in sogenannten Pfannen gelagert sind.

Erfindungsgemäß weist zumindest eine der Klemmflächen eine Erstreckung auf, die in einer die Stummelachse schneidenden Schnittebene einen Klemmwinkel mit der Stummelachse aufspannt, wobei der Klemmwinkel zwischen 20° und 85° und bevorzugt zwischen 40° und 45° liegt. Zumindest eine der Klemmflächen an einem der Klemmteile ist somit vorzugsweise zumindest zweigeteilt, wobei die mit der jeweils gegenüberliegenden Haltefläche korrespondierenden Teile der Klemmfläche in einem Winkel zueinander stehen, welcher zumindest 20° und maximal 85° beträgt. Über den Klemmwinkel kann das Verhältnis der parallel zur Stummelachse oder zur Rohrachse wirkenden Kraft, welche von der Klemmeinheit aufgebracht wird und der vertikalen Komponente der Klemmkraft, welche senkrecht oder orthogonal zur Stummel- oder Rohrachse wirkt, eingestellt werden. Bei einem im bevorzugten Winkel von 45° wird somit die gleiche Kraft in Richtung der Rohrache bzw. orthogonal zur Rohr- oder Stummelachse wie die parallel zur Rohr- und Stummelachse wirkende Kraft von der Klemmeinheit auf die jeweiligen Halteflächen am Achsrohr und am Achsstummel übertragen.

Bevorzugt weist eines der Klemmteile ein Innengewinde auf, mit welchem das Kraftmittel in Eingriff bringbar ist. Diese bevorzugte Ausführungsform reduziert die Anzahl der erforderlichen Bauteile des Achsystems und somit dessen Herstellungskosten, da auf eine zusätzliche Mutter verzichtet werden kann.

Mit Vorteil sind jeweils zwei Klemmflächen an einem Klemmteil vorgesehen, welche V-förmig zueinander stehen, wobei im montierten Zustand die offene Seite des V's eine Haltefläche am Achsrohr und eine Haltefläche am Achsstummel abstützt. Diese Ausgestaltung der Klemmteile erlaubt eine Kombination eines entlang der Rohr- und/oder Stummelachse wirkenden Formschlusses mit der quer zur Rohr- und/oder Stummelachse wirkenden kraftschlüssigen Verbindung der Klemmteile mit dem Achsrohr und dem Achsstummel. Die Gesamtfestigkeit des Achssystems kann hierdurch gesteigert werden.

Vorzugsweise weist die Klemmeinheit im nichtmontierten Zustand ein Untermaß gegenüber dem montierten Zustand auf. Insbesondere bevorzugt weisen dabei die Klemmteile der Klemmeinheit in dem Zustand, in welchem diese noch nicht gegen das Achsrohr oder den Achsstummel gepresst sind, einen geringeren Durchmesser, anders gesagt einen geringeren Krümmungsradius ihrer Klemmflächen, auf als in dem Zustand, in dem die Klemmeinheit eine Klemmkraft auf das Achsrohr und/oder den Achsstummel überträgt. Es kann auf diese Weise zusätzlich zu der durch das Kraftmittel aufgebrachten Klemmkraft auch durch die Klemmeinheit selbst durch elastische Verformung eine Klemmkraft auf das Achsrohr und/oder den Achsstummel erzeugt werden, welche zusätzliche Verlagerungssicherung der Klemmeinheit relativ zu dem Achsrohr und/oder dem Achsstummel gewährleistet.

Weitere Vorteile und Merkmale ergeben sich aus der nachfolgenden Beschreibung mit Bezug auf die beigefügten Figuren. Es versteht sich dabei, dass einzelne Merkmale, die nur in einer der Ausführungsformen dargestellt sind, auch in anderen Ausführungsformen anderer Figuren Anwendung finden können, sofern dies nicht explizit ausgeschlossen wurde oder sich aufgrund technischer Gegebenheiten verbietet.

Es zeigen:
- Fig. 1: eine Schnittansicht eines Achssystems,
- Fig. 2: eine Schnittansicht der in Fig. 1 gezeigten Schnittebene,
- Fig. 3: eine Schnittansicht eines weiteren Achssystems,
- Fig. 4: eine weitere Schnittansicht eines Achssystems,
- Fig. 5: eine Schnittansicht eines erfindungsgemäßen Achssystems,
- Fig. 6: eine weitere Schnittansicht einer bevorzugten Ausführungsform des erfindungsgemäßen Achssystems,
- Fig. 7: eine weitere Schnittansicht einer bevorzugten Ausführungsform des erfindungsgemäßen Achssystems,
- Fig. 8: eine weitere Schnittansicht eines Achssystems.

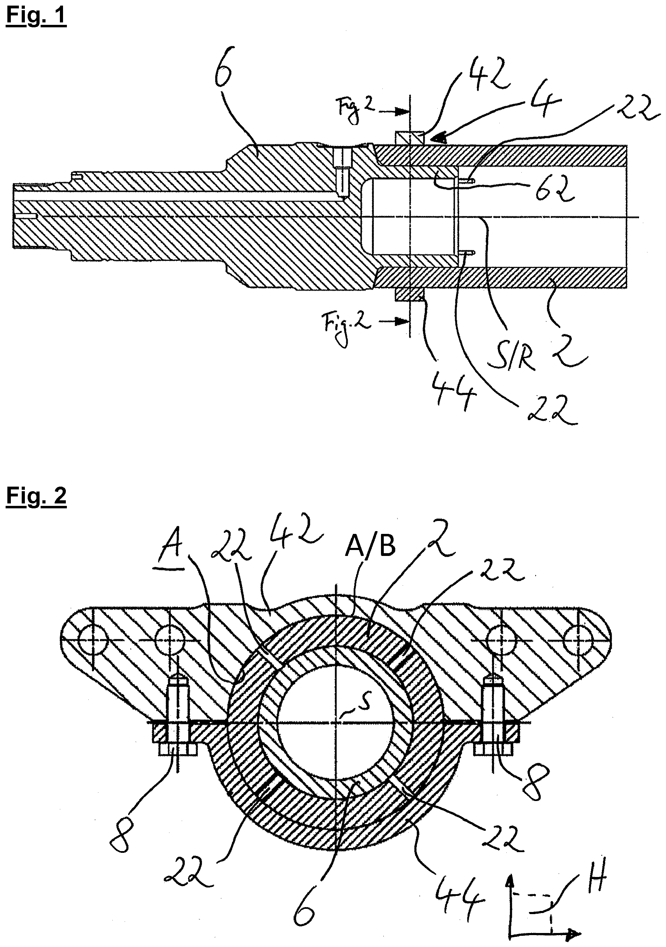

Das in Fig. 1 gezeigte Achssystem weist einen Achsstummel 6 und ein Achsrohr 2 auf, die in einem Überlappungsbereich bereichsweise ineinander geschoben sind. Im Überlappungsbereich weist der Achsstummel vorzugsweise einen Sicherungsabschnitt 62 auf, welcher einen geringeren Durchmesser aufweist als der übrige Bereich des Achsstummels 6. Im Bereich der Überlappung zwischen dem Achsrohr 2 und dem Achsstummel 6 greift eine Klemmeinheit 4 an dem Achsrohr 2 an. Die Klemmeinheit 4 weist dabei ein erstes Klemmteil 42 und ein zweites Klemmteil 44 auf, welche durch die in Fig. 2 gezeigten Kraftmittel 8 gegeneinander gezwungen werden und somit eine Klemmkraft auf das Achsrohr 2 übertragen. Das Achsrohr 2 weist weiterhin zumindest einen Schlitz 22 auf, welcher eine Haupterstreckung aufweist, welche im Wesentlichen parallel zur Stummelachse S und/oder Rohrachse R verläuft. Bei der in Fig. 1 und 2 gezeigten Ausführungsform sind es insbesondere bevorzugt vier Schlitze 22, welche über den Umfang des Achsrohres 2 gleichmäßig verteilt sind, wie in Fig. 2 dargestellt. Die Schlitze 22 dienen insbesondere der Vereinfachung der Verformung des Achsrohres 2 in dem Bereich, in dem die Klemmeinheit 4 eine Klemmkraft auf das Achsrohr 2 überträgt und dieses gegen den Achsstummel 6 zwingt. In Fig. 1 ist weiterhin dargestellt, dass der Achsstummel 6 zumindest einen Hydraulikkanal (ohne Bezugszeichen) aufweist, welcher sich in seinem Längskanal im Wesentlichen parallel zur Stummelachse S und einen Querkanal aufweist, welcher kurz vor dem Überlappungsbereich mit dem Achsrohr 2 seitlich aus der Mantelfläche des Achsstummels 6 mündet. Dieser Hydraulikkanal dient der Versorgung einer am linken distalen Ende des Achsstummels 6 festlegbaren Antriebseinheit, insbesondere eines hydrostatischen Zusatzmotors. Besonders für solche Achsstummel 6, an denen filigrane Strukturen wie Hydraulikkanäle eingebracht sind, eignet sich die vorliegende Erfindung, da dank der Klemmeinheit 4 auf das Einbringen von Schweißnähten verzichtet werden kann, welche gefährliche Temperaturspannungen in das Material des Achsstummels 6 einbringen und die filigranen Strukturen beschädigen können.

Fig. 2 zeigt die in Fig. 1 dargestellte Ausführungsform eines Achssystems. Die Klemmeinheit 4 weist ein erstes Klemmteil 42 aufweist, welches mit Vorteil als Bremsträger ausgebildet ist. Dieser Bremsträger weist eine flanschartig ausgebildete und sich im Wesentlichen quer zur Stummelachse bzw. quer zur Rohrachse R erstreckende flächige Erstreckung auf und bildet einen Flansch zur Festlegung eines Bremssystems. Bei dem in Fig. 2 gezeigten Achssystem ist das erste Klemmteil 42 insbesondere als Bremsträger für eine Scheibenbremse ausgelegt. Darüber hinaus ist am ersten Bremsteil 42 die Klemmfläche A ausgebildet, welche mit einer entsprechenden Haltefläche B am Achsrohr 2 in kraftschlüssigem Eingriff steht. Das zweite Klemmteil 44 ist als einfacher und bereichsweise U-förmig ausgebildeter Bügel ausgelegt, welches an seinen jeweiligen distalen Enden einen Flanschabschnitt zum Durchtritt von je einem Kraftmittel 8 aufweist. Die Kraftmittel 8 greifen dabei in ein vorzugsweise am ersten Klemmteil 42 ausgebildetes Innengewinde ein, wodurch die Kraftmittel 8 eine Klemmkraft zwischen dem ersten Klemmteil 42 und dem zweiten Klemmteil 44 aufbringen. Die Schnittebene der in Fig. 2 gezeigten Ansicht ist die Halteebene H, welche die Klemmeinheit 4, das Achsrohr 2 und den Achsstummel 6 schneidet.

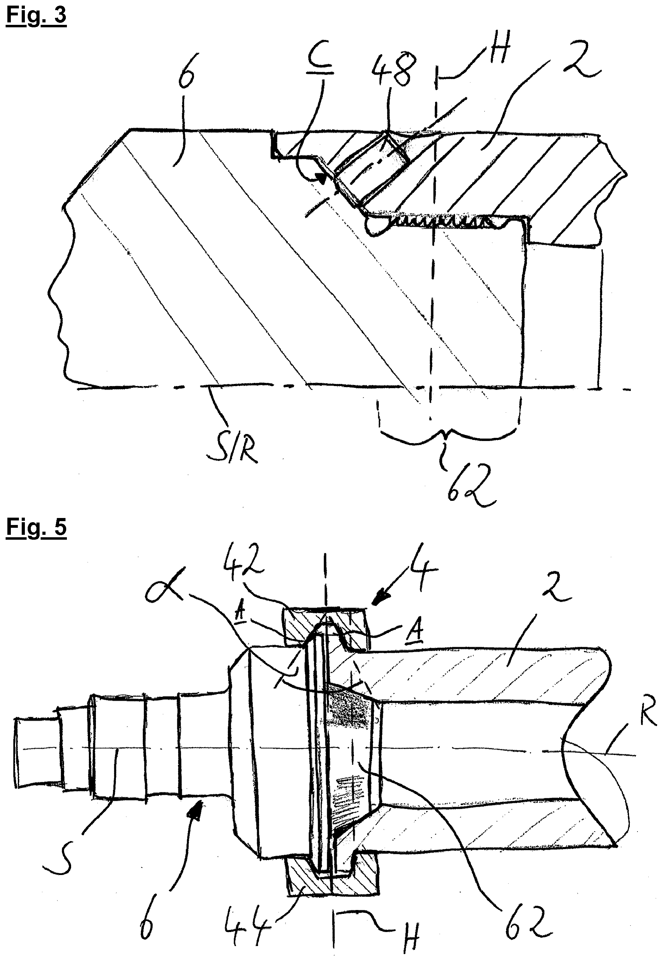

Fig. 3 zeigt ein weiteres Achssystem, wobei der Achsstummel 6 in seinem Sicherungsabschnitt 62 ein Außengewinde aufweist, welches mit einem dazu korrespondierenden Innengewinde am Achsrohr 2 in form- und kraftschlüssigem Eingriff steht. Um in dieser Position gehalten zu werden, ist vorzugsweise ein Gewindestift 48 vorgesehen, welcher in eine Aussparung am Achsrohr 2 mit einem Innengewinde eingeschraubt und gegen eine Stützfläche C am Achsstummel 6 gepresst ist. Auf diese Weise kontert der Gewindestift 48 den Achsstummel 6 gegenüber dem Achsrohr 2 in der Stellung, in welcher der Achsstummel 6 vollständig in das Achsrohr 2 eingeschraubt ist.

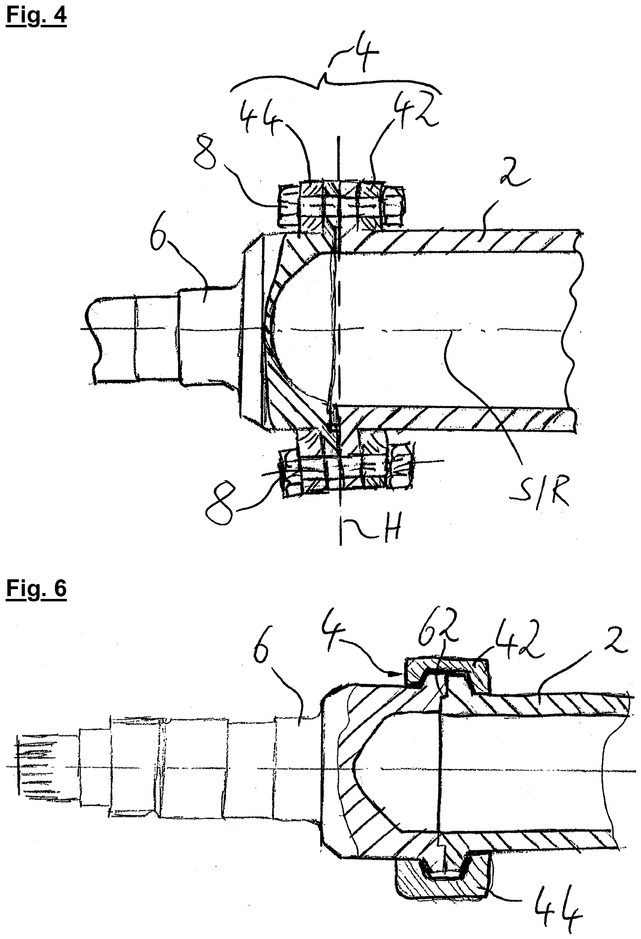

Fig. 4 zeigt eine weitere Ausführungsform eines Achssystems, wobei die Klemmeinheit 4 eine parallel zur Rohrachse oder Stummelachse S/R wirkende Klemmkraft auf entsprechende Abschnitte des Achsstummels 6 und des Achsrohres 2 überträgt. Dabei werden der Achsstummel 6 und das Achsrohr 2 vorzugsweise in einer Kontaktfläche gegeneinander gepresst, welche parallel oder in der quer zur Stummelachse S oder Rohrachse R liegenden Halteebene H liegt. In diesem bevorzugten Ausführungsbeispiel weisen der Achsstummel 6 und das Achsrohr 2 vorzugsweise jeweils eine flanschartig und sich quer zur Stummelachse S und Rohrachse R erstreckende Haltegeometrie auf, an welcher von einer Seite das erste Klemmteil 42 und von der jeweils gegenüberliegenden Seite das zweite Klemmteil 44 angelegt sind, wobei Kraftmittel 8 vorgesehen sind, die die Klemmteile 42, 44 gegeneinander und somit gegen das Achsrohr 2 und den Achsstummel 6 pressen. Der Vorteil dieser Ausführungsform ist, dass die Kraftmittel 8 formschlüssig eine Rotationsbewegung des Achsrohres 2 relativ zum Achsstummel 6 um die Rohr- bzw. Stummelachse R, S verhindern. Vorzugsweise sind das erste Klemmteil 42 und das zweite Klemmteil 44 dabei als Kreisringscheibe ausgeführt, in welcher jeweils eine Vielzahl von Bohrungen (in Fig. 4 sind zwei dargestellt) eingebracht sind. Es versteht sich, dass eines der Klemmteile 42, 44 auch wie in Fig. 2 dargestellt, einen Bremsträger aufweisen kann.

Fig. 5 zeigt eine Ausführungsform des erfindungsgemäßen Achssystems. Die Klemmeinheit 4 weist ein erstes Klemmteil 42 und ein zweites Klemmteil 44 auf, wobei die Klemmteile 42, 44 insbesondere bevorzugt C-förmig oder V-förmig ausgebildet sind. Die mit einem Klemmwinkel α von vorzugsweise 30° bis 40° zueinander stehenden Klemmflächen A des ersten Klemmteils 42 und/oder des zweiten Klemmteils 44 zwingen dabei einen am Achsstummel 6 ausgebildeten Flansch gegen den am Achsrohr 2 ausgebildeten Flansch. Zusätzlich zu dieser kraftschlüssigen und formschlüssigen Festlegung weist der Achsstummel 6 einen vorzugsweise kegelförmig ausgebildeten Sicherungsabschnitt 62 auf, welcher in die Aussparung des Achsrohres 2 eingepresst ist. Dabei bringt die Klemmeinheit 4 somit zum einen die Klemmkraft auf, welche den Achsstummel 6 parallel oder längs zur Stummelachse S oder Rohrachse R gegen das Achsrohr 2 presst und gleichzeitig auch die Kraft, welche den Sicherungsabschnitt 62 des Achsstummels 6 in die Innenseite des Achsrohres 2 drückt. Auf diese Weise und durch die Vielzahl der kraftschlüssig aneinander reibenden und formschlüssig miteinander Hinterschneidungen bildenden Flächen ist durch die Klemmeinheit 4 eine besonders sichere Verbindung zwischen dem Achsrohr 2 und dem Achsstummel 6 herstellbar. Auch bei der in Fig. 5 gezeigten Ausführungsform kann eines oder beide der Klemmteile 42, 44 einen Bremsträger aufweisen.

Fig. 6 zeigt eine bevorzugte Ausführungsform des Achssystems, die der in Fig. 5 gezeigten Ausführungsform ähnelt. Dabei ist anstelle des als Kegelstumpf ausgebildeten Sicherungsabschnitts 62 des Achsstummels 6 eine als Stufung bzw. Rücksprung ausgebildete Geometrie als Sicherungsabschnitt 62 des Achsstummels vorgesehen. Der Vorteil dieser Ausführungsform gegenüber der in Fig. 5 gezeigten Ausführungsform ist das wesentlich geringere Gewicht des Achsstummels 6. Gleichzeitig ist wie zuvor beschrieben die Klemmeinheit dafür vorgesehen, mit schrägen Klemmflächen A die vorzugsweise im Wesentlichen V-förmig zueinander stehen, zwei flanschartige Abschnitte am Achsrohr 2 und am Achsstummel 6 gegeneinander zu zwingen und somit eine Verlagerung des Achsstummels 6 relativ zum Achsrohr 2 zu verhindern.

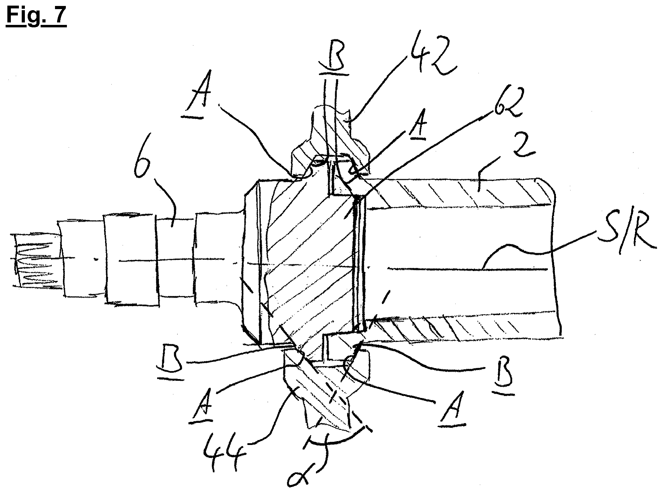

Fig. 7 zeigt eine bevorzugte Ausführungsform des erfindungsgemäßen Achssystems, bei welcher ähnlich der in Fig. 5 gezeigten Ausführungsform, der Achsstummel 6 einen Sicherungsabschnitt 62 aufweist, welcher in die Aussparung des Achsrohres 2 hineinragt. Der Sicherungsabschnitt 62 dieser Ausführungsform erstreckt sich mit Vorteil zylindrisch, wobei ein Formschluss zur Übertragung von Biegemomenten zwischen dem Achsrohr 2 und dem Achsstummel 6 bereitgestellt wird. Am ersten Klemmteil 42 und am zweiten Klemmteil 44 ist angedeutet, dass beide sich jeweils noch weiter quer zur Stummelachse S bzw. zur Rohrachse R erstrecken, wobei die beiden Klemmteile 42, 44 jeweils einen Teilbereich eines Bremsträgers für eine Trommelbremse ausbilden. Bevorzugt sind dabei auch die am Achsstummel 6 und am Achsrohr 2 flanschartig nach außen ragenden Halteflächen B schräg zueinander mit ca. demselben Klemmwinkel α ausgelegt wie die schräg zueinander stehenden Klemmflächen A.

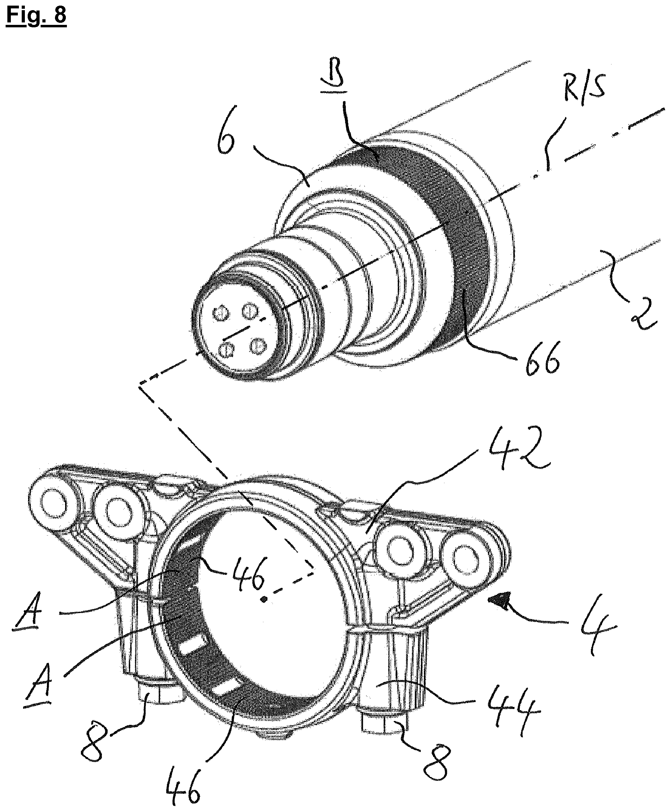

Fig. 8 zeigt eine perspektivische Ansicht einer Ausführungsform des Achssystemes, welche der in Fig. 1 und 2 gezeigten Ausführungsform ähnelt. Die Klemmeinheit 4 und der Verbund aus Achsrohr 2 und Achsstummel 6 sind dabei getrennt voneinander gezeigt, um bessere Ansicht der Klemmflächen A und der Haltefläche B zu ermöglichen. Vorzugsweise ist das erste Klemmteil 42 als Bremsträger für eine Scheibenbremse ausgebildet. Weiterhin ist an der Klemmfläche A des ersten und an der Klemmfläche A des zweiten Klemmteils 42, 44 ein Eingriffsmittel 46 vorgesehen, welches im bevorzugten Fall als Riffelung bzw. Rändelung ausgebildet ist. Analog und korrespondierend hierzu weist der Achsstummel 6 in seiner Haltefläche B ebenfalls eine Rändelung bzw. Riffelung aus. Im zusammengebauten Zustand, wenn also die Klemmeinheit gegen den Achsstummel 6 gepresst ist, sorgen die Eingriffsmittel 46, 66 für eine stabile Verdrehsicherung dank eines Formschlusses, welcher dem Kraftschluss zwischen der Klemmeinheit 4 und dem Achsstummel 6 unterstützt.

### Bezugszeichen:

- 2: - Achsrohr
- 22: - Schlitz
- 4: - Klemmeinheit
- 42: - erstes Klemmteil
- 44: - zweites Klemmteil
- 46: - Eingriffsmittel
- 48: - Gewindestift
- 6: - Achsstummel
- 62: - Sicherungsabschnitt
- 66: - Eingriffsmittel
- 8: - Kraftmittel
- α: - Klemmwinkel
- A: - Klemmfläche
- B: - Haltefläche
- C: - Stützfläche
- H: - Halteebene
- R: - Rohrachse

## Patentansprüche

1. Achssystem, insbesondere für Nutzfahrzeuge, umfassend einen Achsstummel (6) und eine Klemmeinheit (4),
wobei der Achsstummel (6) im Wesentlichen rotationssymmetrisch um eine Stummelachse (S) ausgebildet ist,
wobei in einem montierten Zustand die Klemmeinheit (4) eine Klemmkraft auf den Achsstummel (6) überträgt,
wobei im montierten Zustand die Klemmeinheit (4) und der Achsstummel (6) kraftschlüssig gegen Relativbewegung zueinander gesichert sind,
**dadurch gekennzeichnet, dass** die Klemmeinheit (4) ein erstes Klemmteil (42) und ein zweites Klemmteil (44) aufweist,
wobei das erste Klemmteil (42) und das zweite Klemmteil (44) je eine Klemmfläche (A) aufweisen,
wobei im montierten Zustand das erste und das zweite Klemmteil (42, 44) durch ein Kraftmittel (8) gegeneinander gezwungen werden und die Klemmflächen (A) an korrespondierenden Halteflächen (B) am Achsrohr (2) und/oder am Achsstummel (6) anliegen,
wobei zumindest eine der Klemmflächen (A) eine Erstreckung aufweist, die in einer die Stummelachse (S) schneidenden Schnittebene einen Klemmwinkel (a) mit der Stummelachse (S) aufspannt,
wobei der Klemmwinkel (a) zwischen 20° und 85° liegt.

2. Achssystem nach Anspruch 1,
wobei die Klemmeinheit (4) und der Achsstummel (6) jeweils Eingriffsmittel (46, 66) aufweisen,
wobei die Eingriffsmittel (46, 66) ausgelegt sind, im montierten Zustand die Klemmeinheit (4) und den Achsstummel (6) formschlüssig gegen Rotation relativ zueinander um die Stummelachse (S) zu sichern.

3. Achssystem nach Anspruch 1 oder 2,
umfassend ein Achsrohr (2), welches im Wesentlichen rotationssymmetrisch um eine Rohrachse (R) ausgebildet ist,
wobei das Achsrohr (2) und der Achsstummel (6) derart ausgelegt sind, dass im montierten Zustand das Achsrohr (2) mittels der Klemmeinheit (4) gegen den Achsstummel (6) klemmbar ist, derart dass die Stummelachse (S) und die Rohrachse (R) kollinear zueinander verlaufen.

4. Achssystem nach Anspruch 3,
wobei das Achsrohr (2) und der Achsstummel (6) formschlüssig in Eingriff bringbar sind,
wobei die Klemmeinheit (4) einen Gewindestift (48) aufweist, welcher in einer Aussparung am Achsrohr (2) eingreift und gegen eine Stützfläche (C) am Achsstummel (6) klemmbar ist,
wobei im montierten Zustand des Achssystems der Gewindestift (48) das Achsrohr (2) und den Achsstummel (6) in ihrem formschlüssigen Eingriff miteinander sichert.

5. Achssystem nach einem der Ansprüche 3 oder 4,
wobei der Achsstummel (6) derart in das Achsrohr (2) steckbar ist, dass eine orthogonal zur Stummelachse (S) verlaufende Haltebene (H) den Achsstummel (6), das Achsrohr (2) und die Klemmeinheit (4) schneidet.

6. Achssystem nach Anspruch 5,
wobei das Achsrohr (2) in einem Überlappungsbereich mit dem Achsstummel (6) zumindest einen Schlitz (22) aufweist,
wobei die Haupterstreckungsrichtung des Schlitzes (22) im Wesentlichen parallel zur Rohrachse (R) verläuft.

7. Achssystem nach Anspruch 3,
wobei der Achsstummel (6) und das Achsrohr (2) derart gegeneinander klemmbar sind, dass die Kontaktfläche zwischen beiden Bauteilen im Wesentlichen in einer orthogonal zur Stummelachse (S) verlaufende Haltebene (H) liegt,
wobei die Klemmeinheit (4) ebenensymmetrisch zur Halteebene (H) ausgebildet ist und/oder von der Halteebene (H) geschnitten ist.

8. Achssystem nach einem der Anspruche 3 bis 7,
wobei der Achsstummel (6) einen Sicherungsabschnitt (62) aufweist, der dafür ausgelegt ist im montierten Zustand form- und/oder kraftschlüssig am Achsrohr (2) einzugreifen.

9. Achssystem nach Anspruch 8,
wobei der Sicherungsabschnitt (62) abschnittsweise kegelförmig oder pyramidenförmig ausgebildet ist.

10. Achssystem nach Anspruch 3,
wobei die Klemmflächen (A) mit dem Achsrohr (2) in Eingriff bringbar sind, wobei das Achsrohr (2) im Bereich der Halteflächen (B) derart verformbar ist, dass es am Achsstummel (6) festklemmbar ist.

11. Achssystem nach einem der vorhergehenden Ansprüche,
wobei eines der Klemmteile (42,44) einen Bremsträger aufweist.

12. Achssystem nach einem der vorhergehenden Ansprüche,
wobei der Klemmwinkel (a) zwischen 40° und 50° liegt.

13. Achssystem nach einem der vorhergehenden Ansprüche,
wobei eines der Klemmteile (42, 44) ein Innengewinde aufweist, mit welchem das Kraftmittel (8) in Eingriff bringbar ist.

14. Achssystem nach einem der vorhergehenden Ansprüche,
wobei jeweils zwei Klemmflächen (A) an einem Klemmteil (42, 44) V-förmig zueinander stehen,
wobei im montierten Zustand die offene Seite des Vs eine Haltefläche (B) am Achsrohr (2) und eine Haltefläche (B) am Achsstummel (6) abstützt.

## Claims

1. An axle system, in particular for commercial vehicles, comprising an axle stub (6) and a clamping unit (4),
wherein the axle stub (6) is formed in a substantially rotationally symmetrical manner about a stub axis (S),
wherein the clamping unit (4) in an assembled state transmits a clamping force to the axle stub (6),
wherein the clamping unit (4) and the axle stub (6) in the assembled state are secured non-positively to prevent movement relative to one another, **characterized in that** the clamping unit (4) comprises a first clamp part (42) and a second clamp part (44)
wherein the first clamp part (42) and the second clamp part (44) each comprise a clamping face (A),
wherein the first and the second clamp part (42, 44) in the assembled state are forced against one another by a force element (8) and the clamping faces (A) bear on corresponding holding faces (B) on the axle tube (2) and/or on the axle stub (6),
wherein at least one of the clamping faces (A) has an extent spanning a clamping angle (a) with the stub axis (S) in a plane of section intersecting the stub axis (S),
wherein the clamping angle (a) is between 20° and 85°.

2. The axle system as claimed in claim 1,
wherein the clamping unit (4) and the axle stub (6) each comprise engagement devices (46, 66),
wherein the engagement devices (46, 66) are designed in the assembled state to secure the clamping unit (4) and the axle stub (6) by positive interlock to prevent rotation relative to one another about the stub axis (S).

3. The axle system as claimed in claim 1 or 2,
comprising an axle tube (2), which is formed in a substantially rotationally symmetrical manner about a tube axis (R),
wherein the axle tube (2) and the axle stub (6) are designed in such a way that in the assembled state the axle tube (2) can be clamped against the axle stub (6) by means of the clamping unit (4), in such a way that the stub axis (S) and the tube axis (R) run collinearly with one another.

4. The axle system as claimed in claim 3,
wherein the axle tube (2) and the axle stub (6) can be brought into interlocking engagement,
wherein the clamping unit (4) comprises a threaded pin (48), which engages in an aperture on the axle tube (2) and can be clamped against a supporting surface (C) on the axle stub (6),
wherein in the assembled state of the axle system the threaded pin (48) secures the axle tube (2) and the axle stub (6) to one another in their positively interlocking engagement.

5. The axle system as claimed in one of claims 3 or 4,
wherein the axle stub (6) can be inserted into the axle tube (2) in such a way that a holding plane (H) running at right angles to the stub axis (S) intersects the axle stub (6), the axle tube (2) and the clamping unit (4).

6. The axle system as claimed in claim 5,
wherein the axle tube (2) in an overlapping area with the axle stub (6) comprises at least one slot (22),
wherein the main direction in which the slot (22) extends runs substantially parallel to the tube axis (R).

7. The axle system as claimed in claim 3,
wherein the axle stub (6) and the axle tube (2) can be clamped against one another in such a way that the contact area between the two components lies substantially in a holding plane (H) running at right angles to the stub axis (S),
wherein the clamping unit (4) is formed mirror-symmetrically about the holding plane (H) and/or is intersected by the holding plane (H).

8. The axle system as claimed in one of claims 3 to 7,
wherein the axle stub (6) comprises a locking portion (62), which is designed in the assembled state to engage through positive interlock and/or non-positively on the axle tube (2).

9. The axle system as claimed in claim 8,
wherein the locking portion (62) in some areas is of conical or pyramid-shaped formation.

10. The axle system as claimed in claim 3,
wherein the clamping faces (A) can be brought into engagement with the axle tube (2), wherein the axle tube (2) is deformable in the area of the holding faces (B) in such a way that it can be firmly clamped to the axle stub (6).

11. The axle system as claimed in one of the preceding claims,
wherein one of the clamp parts (42, 44) comprises a brake carrier.

12. The axle system as claimed in one of the preceding claims,
wherein the clamping angle (a) is between 40° and 50°.

13. The axle system as claimed in one of the preceding claims,
wherein one of the clamp parts (42, 44) comprises an internal thread, with which the force element (8) can be made to engage.

14. The axle system as claimed in one of the preceding claims,
wherein two clamping faces (A) on each clamp part (42, 44) form a V-shape with one another,
wherein the open side of the Vs in the assembled state supports a holding face (B) on the axle tube (2) and a holding face (B) on the axle stub (6).

## Revendications

1. Système d'essieu, en particulier pour véhicules utilitaires, comprenant un moignon d'essieu (6) et une unité de serrage (4),
dans lequel
le moignon d'essieu (6) est réalisé sensiblement à symétrie de révolution autour d'un axe de moignon (S),
dans un état monté, l'unité de serrage (4) transmet une force de serrage au moignon d'essieu (6),
dans l'état monté, l'unité de serrage (4) et le moignon d'essieu (6) sont bloqués par coopération de force à l'encontre d'un mouvement relatif l'un par rapport à l'autre,
**caractérisé en ce que**
l'unité de serrage (4) comprend une première partie de serrage (42) et une seconde partie de serrage (44),
la première partie de serrage (42) et la seconde partie de serrage (44) présentent chacune une surface de serrage (A),
dans l'état monté, les première et seconde parties de serrage (42, 44) sont forcées l'une contre l'autre par un moyen exerçant un effort (8), et les surfaces de serrage (A) s'appuient contre des surfaces de maintien correspondantes (B) sur le tube d'essieu (2) et/ou sur le moignon d'essieu (6),
l'une au moins des surfaces de serrage (A) présente une extension qui définit un angle de serrage (α) avec l'axe de moignon (S) dans un plan de coupe coupant l'axe de moignon (S),
l'angle de serrage (α) est compris entre 20° et 85°.

2. Système d'essieu selon la revendication 1,
dans lequel
l'unité de serrage (4) et le moignon d'essieu (6) présentent chacun des moyens d'engagement (46, 66),
les moyens d'engagement (46, 66) sont conçus pour bloquer, dans l'état monté, l'unité de serrage (4) et le moignon d'essieu (6) par coopération de forme à l'encontre d'une rotation relative l'un par rapport à l'autre autour de l'axe de moignon (S).

3. Système d'essieu selon la revendication 1 ou 2,
comprenant un tube d'essieu (2) qui est réalisé sensiblement à symétrie de révolution autour d'un axe de tube (R),
le tube d'essieu (2) et le moignon d'essieu (6) étant conçus de telle manière que dans l'état monté, le tube d'essieu (2) peut être serré contre le moignon d'essieu (6) au moyen de l'unité de serrage (4) de telle manière que l'axe de moignon (S) et l'axe de tube (R) s'étendent de façon colinéaire l'un par rapport à l'autre.

4. Système d'essieu selon la revendication 3,
dans lequel
le tube d'essieu (2) et le moignon d'essieu (6) peuvent être amenés en engagement par coopération de forme,
l'unité de serrage (4) comporte une tige filetée (48) qui s'engage dans une échancrure du tube d'essieu (2) et qui peut être serrée contre une surface d'appui (C) sur le moignon d'essieu (6),
dans l'état monté du système d'essieu, la tige filetée (48) fixe le tube d'essieu (2) et le moignon d'essieu (6) dans leur engagement par coopération de forme l'un avec l'autre.

5. Système d'essieu selon l'une des revendications 3 ou 4,
dans lequel
le moignon d'essieu (6) peut être enfiché dans le tube d'essieu (2) de telle sorte qu'un plan de maintien (H) s'étendant orthogonalement à l'axe de moignon (S) recoupe le moignon d'essieu (6), le tube d'essieu (2) et l'unité de serrage (4).

6. Système d'essieu selon la revendication 5,
dans lequel
le tube d'essieu (2) présente au moins une fente (22) dans une zone de chevauchement avec le moignon d'essieu (6),
la direction principale d'extension de la fente (22) est sensiblement parallèle à l'axe de tube (R).

7. Système d'essieu selon la revendication 3,
dans lequel
le moignon d'essieu (6) et le tube d'essieu (2) peuvent être serrés l'un contre l'autre de telle sorte que la surface de contact entre les deux composants se trouve sensiblement dans un plan de maintien (H) s'étendant orthogonalement à l'axe de moignon (S),
l'unité de serrage (4) est réalisée à symétrie plane par rapport au plan de maintien (H) et/ou est recoupée par le plan de maintien (H).

8. Système d'essieu selon l'une des revendications 3 à 7,
dans lequel
le moignon d'essieu (6) présente une portion de blocage (62) qui est conçue pour s'engager dans le tube d'essieu (2) par coopération de forme et/ou de force, dans l'état monté.

9. Système d'essieu selon la revendication 8,
dans lequel
la portion de blocage (62) est réalisée localement en forme conique ou pyramidale.

10. Système d'essieu selon la revendication 3,
dans lequel
les surfaces de serrage (A) peuvent être amenées en engagement avec le tube d'essieu (2), le tube d'essieu (2) étant déformable dans la zone des surfaces de maintien (B) de telle sorte qu'il peut être fermement serré sur le moignon d'essieu (6).

11. Système d'essieu selon l'une des revendications précédentes,
dans lequel
l'une des parties de serrage (42, 44) comprend un support de frein.

12. Système d'essieu selon l'une des revendications précédentes,
dans lequel
l'angle de serrage (α) est compris entre 40° et 50°.

13. Système d'essieu selon l'une des revendications précédentes,
dans lequel
l'une des parties de serrage (42, 44) présente un taraudage avec lequel le moyen exerçant un effort (8) peut être amené en engagement.

14. Système d'essieu selon l'une des revendications précédentes,
dans lequel
deux surfaces de serrage respectives (A) sont en forme de V l'une par rapport à l'autre sur une partie de serrage (42, 44),
dans l'état monté, le côté ouvert du V soutient une surface de maintien (B) sur le tube d'essieu (2) et une surface de maintien (B) sur le moignon d'essieu (6).
